# EUROPEAN PATENT APPLICATION

(11) **EP 4 421 528 A1**
(43) Date of publication of application: **28.08.2024**
(21) Application number: 22891912.2
(22) Date of filing: 04.11.2022
(51) Int. Cl.: G01S 17/10, G01S 7/483, G06M 1/272, G01S 7/481

(54) **DETECTION METHOD AND APPARATUS, AND TERMINAL**

(30) Priority: 10.11.2021 CN 202111325491
(71) Applicant: Huawei Technologies Co., Ltd., Shenzhen, Guangdong 518129 (CN)
(72) Inventor: WANG, Chao, Shenzhen, Guangdong 518129 (CN)
(74) Representative: Pfenning, Meinig & Partner mbB
(86) International application number: PCT/CN2022/129927
(87) International publication number: WO 2023/083117

(57) **Abstract**

This application provides a detection method, an apparatus, and a terminal, which may be applied to fields such as autonomous driving and intelligent driving. The detection apparatus includes: at least one laser, at least one detection unit, and at least one processing unit. Each of the at least one detection unit is connected to a plurality of signal converters. Different signal converters of the plurality of signal converters may separately process different signals that are emitted at a same moment and that are reflected by a same target object. Therefore, a capability of the detection apparatus in processing a reflected signal can be improved, adverse impact of noise caused by ambient light can be mitigated. This helps improve accuracy in detecting related information of a target object by the detection apparatus.

## Description

### CROSS-REFERENCE TO RELATED APPLICATIONS

This application claims priority to Chinese Patent Application No. 202111325491.3, filed with the China National Intellectual Property Administration on November 10, 2021 and entitled "DETECTION METHOD, APPARATUS, AND TERMINAL", which is incorporated herein by reference in its entirety.

### TECHNICAL FIELD

This application relates to the field of wireless communication technologies, and in particular to a detection method, an apparatus, and a terminal.

### BACKGROUND

A lidar based on a single photon avalanche diode (single photon avalanche diode, SPAD) detector has extremely high sensitivity. A basic principle of distance measurement of the lidar is to collect a single photon event by using the SPAD detector, and identify, by using a spatiotemporal correlation of signal photons, a count of noise photons having no spatiotemporal correlation.

Specifically, a laser of the lidar emits a pulse to the outside, and the SPAD detector of the lidar may detect a signal photon reflected by a detected target. The lidar performs signal photon counting within a system measurement time range after the pulse is emitted several times, to obtain a histogram for single-photon counting. Then, the lidar performs data processing on the histogram by using a specific algorithm to obtain a timestamp of the signal photon, and calculates a distance between the lidar and the detected target based on the timestamp of the signal photon.

However, because there is a specific deadtime (deadtime) after the SPAD detector detects the photon, when optical noise caused by ambient light is relatively strong, the SPAD detector is easily and preferentially triggered by the noise photon, and no sufficient dynamic range responds to the signal photon. As a result, accuracy of the distance measurement of the lidar is low.

Therefore, how to mitigate adverse impact of the optical noise on distance measurement of the lidar is a problem to be resolved at present.

### SUMMARY

This application provides a detection method, an apparatus, and a terminal, to mitigate adverse impact of optical noise on distance measurement of a lidar, and improve accuracy of the distance measurement of the lidar.

According to a first aspect, a detection method is provided. The detection method includes: controlling at least one laser to emit a first emission signal and a second emission signal at a first moment; controlling a first detection unit to receive a first reflected signal corresponding to the first emission signal and a second reflected signal corresponding to the second emission signal; controlling a first signal converter connected to the first detection unit to process the first reflected signal; controlling a second signal converter connected to the first detection unit to process the second reflected signal; and outputting a processing result of the first signal converter and a processing result of the second signal converter to at least one processing unit.

According to the foregoing solution, each detection unit may be connected to a plurality of signal converters, and different signal converters (for example, the first signal converter) of the plurality of signal converters may separately process different signals that are emitted at a same moment and that are reflected by a same target object. This can increase a quantity of reflected signals detected by a detection apparatus, and improve accuracy in detecting related information of the target object by the detection apparatus.

It should be understood that, in this solution, a quantity of noise signals detected by the detection apparatus is increased. However, different signals that are emitted at a same moment and that are reflected by a same target object have an extremely strong time correlation, but noise signals do not have a time correlation and are distributed randomly in time. Therefore, a quantity of reflected signals actually detected by the detection apparatus is far greater than a quantity of detected noise signals. Therefore, in this solution, a signal-to-noise ratio can be increased to mitigate adverse impact of noise caused by ambient light. This helps improve accuracy in detecting related information of the target object by the detection apparatus.

In a possible implementation, the first detection unit is a single photon avalanche diode SPAD detection unit, and the first signal converter and the second signal converter are time-to-digital converters TDCs.

In this way, a quantity of TDCs connected to the SPAD detection unit is increased, so that counting may be performed on signal photons received within a SPAD deadtime, to increase a quantity of counted signal photons. This mitigates adverse impact of the noise caused by ambient light, and helps improve a capability of a lidar in detecting the target object.

In a possible implementation, the first detection unit includes at least one detection subunit. When the first detection unit includes one detection subunit, that is, the detection subunit and the signal converter are in a one-to-one relationship, structural complexity may be reduced. When the first detection unit includes a plurality of detection subunits, that is, the detection subunit and the signal converter may be in a many-to-one relationship, a detection capability of the first detection unit may be further improved.

In a possible implementation, a start time of the first signal converter and a start time of the second signal converter are different. In this way, a dynamic range of the detection apparatus may be increased from a dimension of time, that is, occasions for the detection apparatus to detect photons are increased, to increase an overall quantity of photons that can be detected by the detection apparatus.

In a possible implementation, strength of a trigger signal corresponding to the first signal converter and strength of a trigger signal corresponding to the second signal converter are different. In this way, the dynamic range of the detection apparatus may be increased from a dimension of signal amplitude, to increase the overall quantity of photons that can be detected by the detection apparatus.

In a possible implementation, the method further includes: controlling the at least one processing unit to determine information about at least one target based on the processing result of the first signal converter and the processing result of the second signal converter. The information about at least one target includes but is not limited to one or more of a distance, an orientation, a height, a speed, an attitude, or a shape of the at least one target.

In this way, the information about at least one target may be calculated based on output results of a plurality of signal converters of a same detection unit, to improve detection precision on the target.

In a possible implementation, the controlling the at least one processing unit to determine information about at least one target based on the processing result of the first signal converter and the processing result of the second signal converter may include: controlling the at least one processing unit to determine location information of the at least one target based on a histogram corresponding to the processing result of the first signal converter and the processing result of the second signal converter, where the histogram includes information about time at which the first detection unit receives the first reflected signal and information about time at which the first detection unit receives the second reflected signal.

In this way, statistics on a timestamp of the signal photon may be efficiently collected based on the histogram, to improve efficiency in calculating the related information of the target by the detection apparatus.

In a possible implementation, a deadtime corresponding to the first signal converter is less than or equal to a deadtime corresponding to the first detection unit.

In this way, an overall capability of the detection apparatus in performing counting on the photons is improved. This helps further improve the capability of the lidar in detecting the target obj ect.

In a possible implementation, the deadtime corresponding to the first signal converter is the same as a deadtime corresponding to the second signal converter, or a type of the first signal converter is the same as a type of the second signal converter.

In this way, complexity of the detection apparatus can be reduced.

According to a second aspect, a detection method is provided. The detection method includes: At least one laser emits a first emission signal and a second emission signal at a first moment. A first detection unit receives a first reflected signal corresponding to the first emission signal and a second reflected signal corresponding to the second emission signal. A first signal converter connected to the first detection unit processes the first reflected signal.

A second signal converter connected to the first detection unit processes the second reflected signal. At least one processing unit processes a processing result of the first signal converter and a processing result of the second signal converter.

In a possible implementation, the first detection unit includes at least one detection subunit.

In a possible implementation, a start time of the first signal converter and a start time of the second signal converter are different. Alternatively, strength of a trigger signal corresponding to the first signal converter and strength of a trigger signal corresponding to the second signal converter are different.

In a possible implementation, that at least one processing unit processes a processing result of the first signal converter and a processing result of the second signal converter includes: The at least one processing unit determines information about at least one target based on the processing result of the first signal converter and the processing result of the second signal converter.

In a possible implementation, that the at least one processing unit determines information about at least one target based on the processing result of the first signal converter and the processing result of the second signal converter includes: The at least one processing unit determines location information of the at least one target based on a histogram corresponding to the processing result of the first signal converter and the processing result of the second signal converter, where the histogram includes information about time at which the first detection unit receives the first reflected signal and information about time at which the first detection unit receives the second reflected signal.

In a possible implementation, a deadtime corresponding to the first signal converter is less than or equal to a deadtime corresponding to the first detection unit.

In a possible implementation, the deadtime corresponding to the first signal converter is the same as a deadtime corresponding to the second signal converter, or a type of the first signal converter is the same as a type of the second signal converter.

In a possible implementation, the first detection unit is a SPAD detection unit, and the first signal converter and the second signal converter are TDCs.

According to a third aspect, a processing apparatus is provided. The processing apparatus includes at least one processor and an interface circuit. The interface circuit is configured to: receive a signal from another apparatus other than the processing apparatus and send the signal to the processor, or send a signal from the processor to another apparatus other than the processing apparatus. The processor is configured to: control at least one laser to emit a first emission signal and a second emission signal at a first moment; control a first detection unit to receive a first reflected signal corresponding to the first emission signal and a second reflected signal corresponding to the second emission signal; control a first signal converter connected to the first detection unit to process the first reflected signal; control a second signal converter connected to the first detection unit to process the second reflected signal; and output a processing result of the first signal converter and a processing result of the second signal converter to at least one processing unit.

In a possible implementation, the first detection unit includes at least one detection subunit.

In a possible implementation, a start time of the first signal converter and a start time of the second signal converter are different. Alternatively, strength of a trigger signal corresponding to the first signal converter and strength of a trigger signal corresponding to the second signal converter are different.

In a possible implementation, the processor is further configured to control the at least one processing unit to determine information about at least one target based on the processing result of the first signal converter and the processing result of the second signal converter.

In a possible implementation, the processor is further configured to control the at least one processing unit to determine location information of the at least one target based on a histogram corresponding to the processing result of the first signal converter and the processing result of the second signal converter, where the histogram includes information about time at which the first detection unit receives the first reflected signal and information about time at which the first detection unit receives the second reflected signal.

In a possible implementation, a deadtime corresponding to the first signal converter is less than or equal to a deadtime corresponding to the first detection unit.

In a possible implementation, the deadtime corresponding to the first signal converter is the same as a deadtime corresponding to the second signal converter, or a type of the first signal converter is the same as a type of the second signal converter.

In a possible implementation, the first detection unit is a SPAD detection unit, and the first signal converter and the second signal converter are TDCs.

According to a fourth aspect, a detection apparatus is provided. The detection apparatus includes at least one laser, at least one detection unit, and at least one processing unit. Each of the at least one detection unit is connected to a plurality of signal converters. The at least one laser is configured to emit a first emission signal and a second emission signal at a first moment. A first detection unit is configured to receive a first reflected signal corresponding to the first emission signal and a second reflected signal corresponding to the second emission signal, where the first detection unit is any detection unit in the at least one detection unit, and the first detection unit is connected to a first signal converter and a second signal converter. The first signal converter is configured to process the first reflected signal. The second signal converter is configured to process the second reflected signal. The at least one processing unit is configured to process a processing result of the first signal converter and a processing result of the second signal converter.

In a possible implementation, the first detection unit includes at least one detection subunit.

In a possible implementation, a start time of the first signal converter and a start time of the second signal converter are different. Alternatively, strength of a trigger signal corresponding to the first signal converter and strength of a trigger signal corresponding to the second signal converter are different.

In a possible implementation, the at least one processing unit is configured to determine information about at least one target based on the processing result of the first signal converter and the processing result of the second signal converter.

In a possible implementation, the at least one processing unit is configured to determine location information of the at least one target based on a histogram corresponding to the processing result of the first signal converter and the processing result of the second signal converter, where the histogram includes information about time at which the first detection unit receives the first reflected signal and information about time at which the first detection unit receives the second reflected signal.

In a possible implementation, a deadtime corresponding to the first signal converter is less than or equal to a deadtime corresponding to the first detection unit.

In a possible implementation, the deadtime corresponding to the first signal converter is the same as a deadtime corresponding to the second signal converter, or a type of the first signal converter is the same as a type of the second signal converter.

In a possible implementation, the first detection unit is a SPAD detection unit, and the first signal converter and the second signal converter are TDCs.

According to a fifth aspect, a processing apparatus is provided. The processing apparatus includes a module configured to perform the method according to any one of the first aspect or the optional implementations of the first aspect.

According to a sixth aspect, a computer-readable storage medium is provided. The computer-readable storage medium includes a program or instructions, where when the program or the instructions are run on a computer, the method according to any one of the first aspect or the optional implementations of the first aspect is performed.

According to a seventh aspect, a terminal is provided. The terminal includes the apparatus according to any one of the fourth aspect or the optional implementations of the fourth aspect.

### BRIEF DESCRIPTION OF DRAWINGS

FIG. 1 is a schematic diagram of a lidar to which an embodiment of this application is applicable;
FIG. 2 is a schematic diagram of a structure of a SPAD detector;
FIG. 3 is a schematic diagram of single-photon counting;
FIG. 4 is a schematic diagram of a possible detection apparatus according to an embodiment of this application;
FIG. 5 is a flowchart of a detection method according to an embodiment of this application;
FIG. 6A is a schematic diagram of a working principle of a SPAD detection unit according to an embodiment of this application;
FIG. 6B is a schematic diagram of a working principle of a TDC according to an embodiment of this application;
FIG. 7A is a schematic diagram of a structure of a SPAD detector according to an embodiment of this application;
FIG. 7B is a schematic diagram of a structure of another SPAD detector according to an embodiment of this application;
FIG. 8 is a schematic diagram of another detection apparatus according to an embodiment of this application;
FIG. 9 is a schematic diagram of a value relationship between a deadtime corresponding to a first TDC and a deadtime corresponding to a SPAD detection unit;
FIG. 10A is a schematic diagram of another working principle of TDC according to an embodiment of this application;
FIG. 10B is a schematic diagram of another working principle of TDC according to an embodiment of this application;
FIG. 11 is a schematic diagram of a processing apparatus 1110 according to an embodiment of this application; and
FIG. 12 is a flowchart of another detection method according to an embodiment of this application.

### DESCRIPTION OF EMBODIMENTS

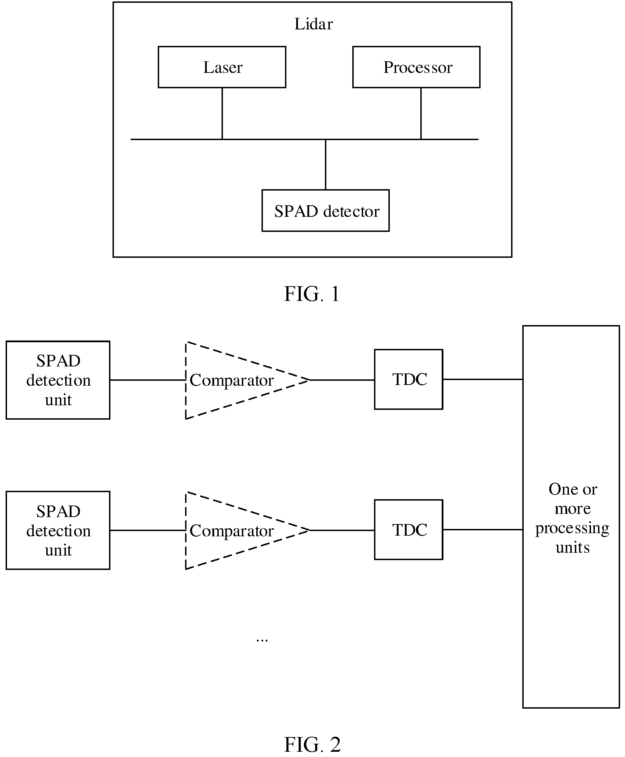

FIG. 1 is a schematic diagram of a lidar to which an embodiment of this application is applicable. The lidar includes: a laser, a SPAD detector, and a processor. Certainly, the lidar may further include another component. The laser is configured to emit a pulse (that is, emit a signal) to the outside, and the pulse is reflected after reaching a detected target (which may also be referred to as a target object). The SPAD detector may receive a signal photon (that is, reflected signal) reflected by the target object, and output related information of the target obj ect based on the signal photon reflected by the target object. The processor is configured to control the laser and the SPAD detector to perform the foregoing operations. The related information of the target object includes but is not limited to one or more of a distance, an orientation, a height, a speed, an attitude, a shape, and the like.

FIG. 2 is a schematic diagram of a structure of a SPAD detector. The SPAD detector may include a plurality of SPAD detection units. Each SPAD detection unit is connected to a TDC through a comparator, and then the TDC is connected to one or more processing units. Certainly, the comparator may alternatively be included in the SPAD detection unit or included in the TDC. Therefore, a dashed line in FIG. 2 indicates that the comparator is optional. In addition, the SPAD detector may further include another component, or some components (for example, the processing unit) that are shown in FIG. 2 may be disposed outside the SPAD detector. This is not limited in this application.

The SPAD detection unit is configured to: receive a photon (the photon herein may be a signal photon or a noise photon) after a pulse is emitted, and generate multiplication effect after receiving a single photon and output an analog pulse signal. The comparator is configured to process the analog pulse signal output by the SPAD detection unit, to generate a digital pulse signal, that is, generate a rectangular wave (or referred to as a square wave). The TDC is configured to perform single-photon counting in response to a rising edge of a rectangular wave signal (the single-photon counting herein may be counting on the signal photon, or may be counting on the noise photon). The one or more processing units perform single-photon counting within a system measurement time range after the pulse is emitted several times, to obtain a histogram for the single-photon counting, perform data processing on the histogram by using a specific algorithm, to obtain a timestamp of the signal photon, and calculate a distance between a lidar and a target object based on the timestamp of the signal photon.

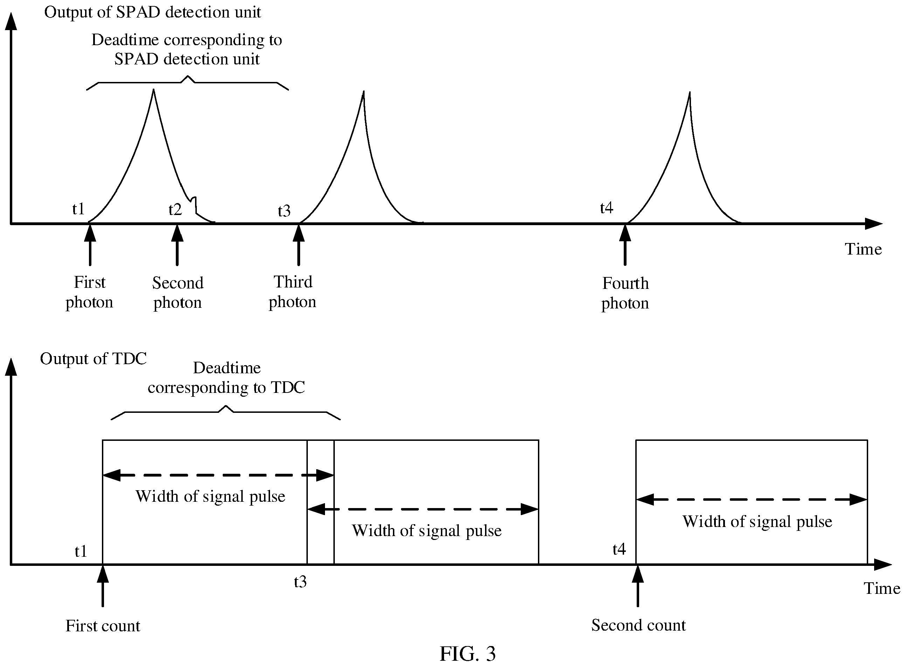

FIG. 3 is a schematic diagram of single-photon counting. For example, a comparator is disposed in a TDC (that is, a rectangular wave is generated by the TDC). At a moment t1, a SPAD detection unit receives a first photon, and the photon may be a signal photon or a noise photon. The SPAD detection unit generates avalanche multiplication in response to the received photon, and outputs an analog pulse signal. After the analog pulse signal passes through the comparator, a rectangular wave is generated. The TDC connected to the SPAD detection unit generates a count in response to a rising edge of the rectangular wave, that is, the TDC generates a first count at the moment 11. The rectangular wave lasts for a period of time, and the period of time is referred to as a signal pulse width or a deadtime corresponding to the TDC (TDC deadtime for short). During the TDC deadtime, the TDC does not respond to a rising edge of another rectangular wave.

It should be noted that, within a period of time after the SPAD detection unit receives one photon and generates avalanche multiplication, a capability of the SPAD detection unit in responding to another photon is greatly weakened. A time when a capability of the SPAD detection unit in detecting a photon is relatively weak is referred to as a deadtime corresponding to the SPAD (SPAD deadtime for short), and is approximately equal to duration for which the SPAD detection unit generates multiplication effect and outputs an analog pulse signal.

At a moment t2 and a moment t3, the SPAD detection unit receives a second photon and a third photon respectively. Because the moment t2 is in the SPAD deadtime, the capability of the SPAD detection unit in responding to a photon is weak, and strength of an analog pulse signal corresponding to the moment t2 is less than a threshold corresponding to the comparator. Therefore, the comparator is not triggered to generate a rectangular wave, and the TDC does not perform counting on the received photon.

Because the moment t3 does not fall within the SPAD deadtime, when one photon, that is, the third photon shown in the figure, is received at the moment t3, the photon may be a signal photon or a noise photon, and the SPAD detection unit generates avalanche multiplication in response to the received photon, and outputs an analog pulse signal. However, because the moment t3 falls within a TDC deadtime range corresponding to a previous rectangular wave, when the third photon is received at the moment t3, the comparator is not triggered to generate a new rectangular wave, but extends a waveform of the previous rectangular wave. Extended duration is one signal pulse width starting from the moment t3. Because the comparator is not triggered to generate a new rectangular wave at the moment t3, the TDC does not perform counting on the third photon received at the moment t3.

At a moment t4, the SPAD detection unit receives a fourth photon, and the photon may be a signal photon or a noise photon. Because a SPAD deadtime has ended at the moment t4, the SPAD detection unit generates avalanche multiplication in response to the received photon, and outputs an analog pulse signal. Because the moment t4 does not fall within a deadtime range of the TDC, the comparator is triggered to generate a rectangular wave in response to a rising edge of the analog pulse signal, and the TDC connected to the SPAD detection unit generates a count in response to the rising edge of the rectangular wave, that is, the TDC generates a second count at the moment t4. The rectangular wave lasts for specific duration, and the duration is one signal pulse width.

It can be learned from the foregoing single-photon counting process that, the TDC connected to the SPAD detection unit performs counting on only a part of photons received by the SPAD detection unit. As a result, a large quantity of signal photons are not counted, and accuracy in performing distance measurement on a target object by the SPAD detector is reduced. Especially, when background noise caused by ambient light is relatively strong, the SPAD detector is easily triggered by the noise photon preferably, and does not have a sufficient dynamic range to respond to a signal photon reflected by the target object. Therefore, detection performance of a lidar is significantly deteriorated. The dynamic range may be represented by a quantity of single-photon counting completed by the SPAD detector in a unit time. As a dynamic range of the SPAD detector is larger, the quantity of single-photon counting completed by the SPAD detector is larger, and detection performance of the SPAD detector is higher.

To improve the detection performance of the lidar, embodiments of this application provide a detection apparatus and a detection method. The detection apparatus is, for example, a lidar or a part of the lidar. The detection apparatus includes a laser and a detector. There may be one or more lasers. The detector may include at least one detection unit, at least one processing unit, and a plurality of signal converters connected to each detection unit.

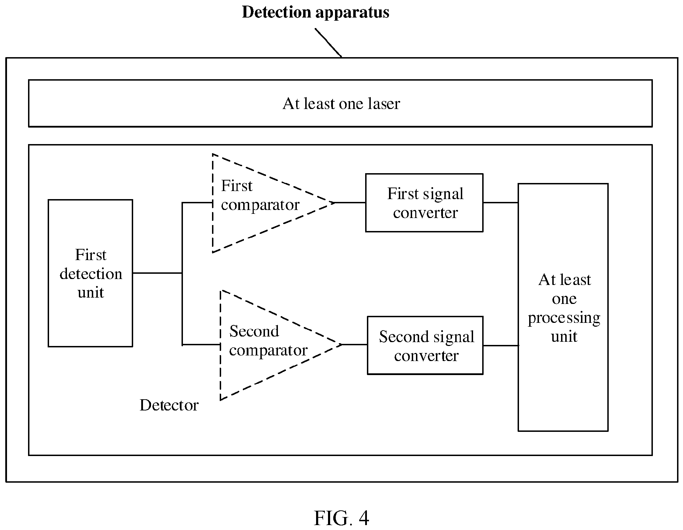

For example, FIG. 4 is a schematic diagram of a possible detection apparatus according to an embodiment of this application. The detection apparatus includes at least one laser and a first detection unit. The first detection unit is connected to a first signal converter and a second signal converter. The first signal converter and the second signal converter are connected to at least one processing unit.

The first detection unit may be any detection unit having a single photon detection capability. In a possible implementation, the first detection unit is a SPAD detection unit.

The first signal converter and the second signal converter may be any devices that may perform single-photon counting in response to a signal output by the first detection unit. In a possible implementation, the signal converter is a TDC, an analog-to-digital converter (analog-to-digital converter, ADC), or the like. This is not limited in this application.

Each SPAD detection unit may be connected to a TDC through a comparator. For example, the first detection unit is connected to the first signal converter through a first comparator, and the second detection unit is connected to the second signal converter through a second comparator. Certainly, the first comparator may alternatively be included in a first SPAD detection unit or included in a first TDC, and the second comparator may alternatively be included in a second SPAD detection unit or included in a second TDC. Therefore, in FIG. 4, dashed lines are used to indicate that the first comparator and the second comparator are optional.

The at least one processing unit may be any chip or integrated circuit having a computing capability. For example, the processing unit may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The general-purpose processor may be a microprocessor, or may be any conventional processor.

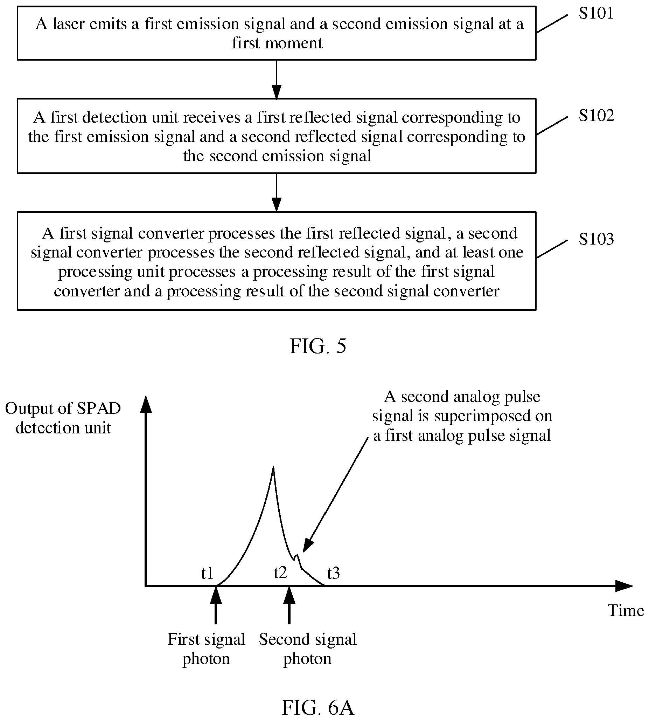

Based on the detection apparatus shown in FIG. 4, an embodiment of this application provides a detection method. The method is performed by the detection apparatus shown in FIG. 4. Refer to FIG. 5. The method includes the following steps.

S101: A laser emits a first emission signal and a second emission signal at a first moment.

For example, the laser emits a pulse to the outside at the first moment. The pulse includes several signal photons. The first emission signal and the second emission signal may be any two signal photons in the pulse, for example, a first signal photon and a second signal photon.

S102: The first detection unit receives a first reflected signal corresponding to the first emission signal and a second reflected signal corresponding to the second emission signal.

Some or all signal photons in the pulse emitted by the laser arrive at a target object, and are reflected by the target object to form a reflected signal. The reflected signal includes several signal photons, for example, includes the first reflected signal (that is, the first signal photon) corresponding to the first emission signal and the second reflected signal (that is, the second signal photon) corresponding to the second emission signal. The first detection unit may receive a signal photon reflected by the target object. Certainly, the first detection unit may further receive a noise photon (that is, ambient light). After receiving the signal photon or the noise photon, the first detection unit may trigger a connected signal converter to perform single-photon counting.

For example, the first detection unit is a SPAD detection unit. FIG. 6A is a schematic diagram of a working principle of a SPAD detection unit according to an embodiment of this application. At a moment t1, the SPAD detection unit receives the first signal photon, and the first signal photon triggers the SPAD detection unit to generate multiplication effect, output a first analog pulse signal, and enter a SPAD deadtime. At a moment t2, the SPAD detection unit receives the second signal photon. Because the moment t2 is in a range of the SPAD deadtime, a capability of the SPAD detection unit in detecting the photon is weakened, but the SPAD detection unit still has a detection capability, and may output an analog pulse signal (the second analog pulse signal) with a relatively small amplitude. The second analog pulse signal triggered by the second signal photon may be superimposed on the analog pulse signal triggered by the first signal photon. As shown in FIG. 6A, a waveform of the analog pulse signal has a small protrusion at the moment t2, that is, superposition effect of the analog pulse signal triggered by the second signal photon and the analog pulse signal triggered by the first signal photon.

S103: The first signal converter processes the first reflected signal; the second signal converter processes the second reflected signal; and the at least one processing unit processes a processing result of the first signal converter and a processing result of the second signal converter.

Optionally, that the at least one processing unit processes a processing result of the first signal converter and a processing result of the second signal converter includes: The at least one processing unit determines information about at least one target based on the processing result of the first signal converter and the processing result of the second signal converter. The information about the at least one target includes but is not limited to one or more of a distance, an orientation, a height, a speed, an attitude, or a shape of the at least one target.

In an implementation, a start time of the first signal converter and a start time of the second signal converter are different.

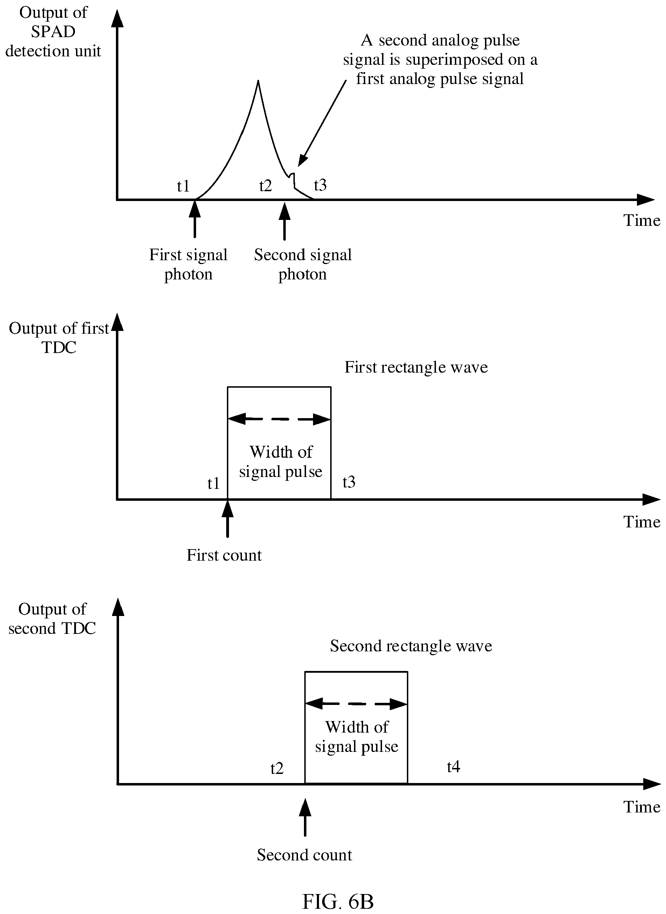

For example, the first signal converter is the first TDC, and the second signal converter is the second TDC. FIG. 6B is a schematic diagram of a working principle of a TDC according to an embodiment of this application. When the first TDC is started earlier than the second TDC, after the first analog pulse signal output by the SPAD detection unit passes through the first comparator, a first rectangular wave is generated, and the first TDC performs, in response to a rising edge of the first rectangular wave, single-photon counting once, to obtain a first processing result for the first reflected signal; and after second analog pulse signal output by the SPAD detection unit passes through the second comparator, a second rectangular wave is generated, and the second TDC performs, in response to a rising edge of the second rectangular wave, single-photon counting once, to obtain a second processing result for the second reflected signal. Then, the first TDC and the second TDC separately send the first processing result and the second processing result to the at least one processing unit. The at least one processing unit determines the information about the at least one target based on the first processing result and the second processing result.

It may be understood that the first comparator and the second comparator may be disposed in the SPAD detection unit, may be disposed in the TDC, or may be disposed between the SPAD detection unit and the TDC. This is not limited in this application.

It may be understood that a threshold corresponding to the second comparator is less than a preset value, so that the second rectangular wave may be generated after the second analog pulse signal passes through the second comparator. For example, the preset value may be a threshold corresponding to a comparator in a device shown in FIG. 2.

Optionally, a threshold corresponding to the first comparator may be greater than or equal to the threshold corresponding to the second comparator.

It may be understood that starting of the signal converter includes but is not limited to one or more of powering on of the signal converter, enabling of a counting function of the signal converter, conduction of a signal transmission path between the signal converter and the first detection unit, or the like.

In this embodiment of this application, the first signal converter and the second signal converter may be started at different times in a plurality of implementations. The following provides several possible implementations.

Manner 1: In an example in which the starting of the signal converter is powering on of the signal converter, a logic control circuit powers on the first signal converter at a second moment, and powers on the second signal converter at a third moment. The second moment is after the first moment, and Δt1 duration is between the second moment and the first moment. The third moment is after the second moment, and Δt2 duration is between the third moment and the second moment. Δt1 and Δt2 may be obtained by the processing unit through calculation based on previously collected histogram data.

Manner 2: In an example in which starting of the signal converter is enabling of a counting function of the first signal converter, a logic control circuit powers on the first signal converter and the second signal converter at a second moment, and enables a counting function of the first signal converter (but does not enable a counting function of the second signal converter); and when or after receiving the first reflected signal at a fourth moment, the first signal converter sends a trigger signal to the second signal converter, and enables the counting function of the second signal converter by using the trigger signal. The second moment is after the first moment and Δt1 duration is between the second moment and the first moment. Δt1 may be obtained by the processing unit through calculation based on previously collected histogram data. The fourth moment is after the second moment.

Certainly, the foregoing two manners are only examples rather than specific limitations.

In another implementation, strength of a trigger signal corresponding to the first signal converter and strength of a trigger signal corresponding to the second signal converter are different. Specifically, the first signal converter performs single-photon counting only when an amplitude of an analog pulse signal output by the first detection unit exceeds a first threshold, and the second signal converter performs single-photon counting only when an amplitude of an analog pulse signal output by the first detection unit exceeds a second threshold. The first threshold is greater than the second threshold, or the second threshold is greater than the first threshold.

For example, refer to FIG. 6B. At the moment t1, the first signal photon triggers the SPAD detection unit to output the first analog pulse signal, and the first analog pulse signal triggers the first comparator to output the first square wave, and then the first TDC performs counting on the first signal photon. At the moment t2, the second signal photon triggers the SPAD detection unit to output the second analog pulse signal, and the second analog pulse signal triggers the second comparator to output the second square wave, and then the first TDC performs counting on the second signal photon.

In specific implementation, the first signal converter and the second signal converter may be separately triggered under different signal strength by using a diode, a logic circuit, or the like.

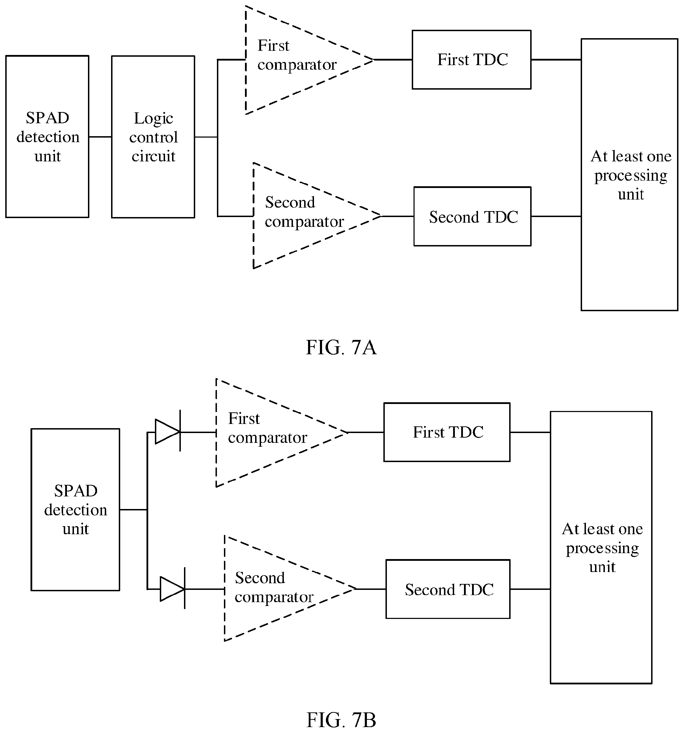

For example, refer to FIG. 7A. A logic control circuit (specifically, an AND/OR gate circuit) is disposed behind the SPAD detection unit and before the first TDC and the second TDC. At the moment t1, the first signal photon triggers the SPAD detection unit to output the first analog pulse signal. Strength of the first analog pulse signal exceeds the first threshold. The logic control circuit is connected to a branch on which the first TDC is located, and the first analog pulse signal triggers the first comparator to output the first square wave, and then the first TDC performs counting on the first signal photon. At the moment t2, the second signal photon triggers the SPAD detection unit to output the second analog pulse signal, where strength of the second analog pulse signal exceeds the second threshold but is less than the first threshold, the logic control circuit is connected to a branch circuit on which the second TDC is located, and the second analog pulse signal triggers the second comparator to output the second square wave, and then the first TDC performs counting on the second signal photon.

For example, refer to FIG. 7B. A diode is separately disposed at a front end of the first comparator and a front end of the second comparator. At the moment t1, the first signal photon triggers the SPAD detection unit to output the first analog pulse signal. Strength of the first analog pulse signal exceeds the first threshold. The diode at the front end of the first comparator is conducted, the diode at the front end of the second comparator is cut off, and the first analog pulse signal triggers the first comparator to output the first square wave, and then the first TDC performs counting on the first signal photon. At the moment t2, the second signal photon triggers the SPAD detection unit to output the second analog pulse signal. Strength of the second analog pulse signal exceeds the second threshold but is less than the first threshold. The diode at the front end of the first comparator is cut off, the diode at the front end of the second comparator is conducted, and the second analog pulse signal triggers the second comparator to output the second square wave, and then the first TDC performs counting on the second signal photon.

It may be understood that when the second threshold is smaller, a dynamic range of the detector is larger. The first threshold corresponding to the first comparator and the second threshold corresponding to the second comparator may be fixed, or may be dynamically configured by the at least one processing unit. For example, when the at least one processing unit determines, based on the previously obtained histogram data, that the dynamic range of the detector is relatively small, a value of the second threshold may be reduced, to increase the dynamic range of the detector.

Certainly, in the foregoing description, the first signal converter and the second signal converter are triggered at different signal strength by using the logic control circuit or the diode. In actual application, there may be another implementation.

Certainly, the foregoing two implementations may alternatively be implemented in combination, that is, a start time of the first signal converter and a start time of the second signal converter are different, and strength of a trigger signal corresponding to starting of the first signal converter and strength of a trigger signal corresponding to starting of the second signal converter are also different.

It should be noted that, in the foregoing description, the SPAD detection unit receives one photon (that is, the second signal photon) within the SPAD deadtime. However, in actual application, the SPAD detection unit may receive a plurality of photons within the SPAD deadtime. This is not limited in this application.

It should be noted that, in the foregoing description, a quantity of detection units in the detection apparatus is 1, but in actual application, a quantity of detection units in the detection apparatus is not limited to 1, there may be a plurality of detection units in the detection apparatus, and the plurality of detection units may cooperate with each other.

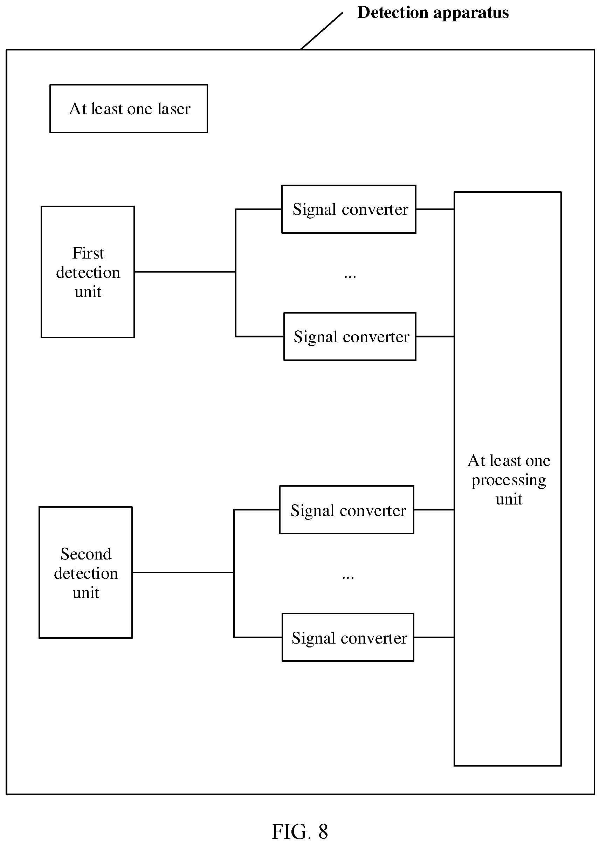

For example, FIG. 8 is a schematic diagram of another detection apparatus according to an embodiment of this application. The detection apparatus includes a first detection unit and a second detection unit. A plurality of signal converters (configured to perform counting on photons detected by the first detection unit) are connected behind the first detection unit, and a plurality of signal converters (configured to perform counting on photons detected by the second detection unit) are connected behind the second detection unit. At least one processing unit determines information about at least one target based on a processing result of the signal converter connected to the first detection unit and a processing result of the signal converter connected to the second detection unit. For a working method of the second detection unit and the signal converter connected to the second detection unit, refer to a working method of the first detection unit and the signal converter connected to the first detection unit, and details are not described herein again.

According to the foregoing solution of this application, each detection unit is connected to a plurality of signal converters, and different signal converters in the plurality of signal converters may separately process different signals that are emitted at a same moment and that are reflected by a same target object. This can improve a capability of the detection apparatus in processing the reflected signal, and mitigate adverse impact of noise caused by ambient light. This helps improve accuracy of the detection apparatus in detecting related information of the target obj ect.

For example, a SPAD detection unit is connected to a plurality of TDCs. A quantity of TDCs connected to the SPAD detection unit is increased, so that counting may be performed on signal photons received within a SPAD deadtime, to increase a count quantity of signal photons. In this way, when determining related information of the target object, such as a distance, an orientation, a height, a speed, an attitude, or a shape, the processing unit may refer to a count of more signal photons, to mitigate adverse impact of the noise caused by ambient light. This helps improve a capability of a lidar in detecting the target object.

It should be noted that, in the foregoing solution of this application, a quantity of detected signal photons may be increased, and in addition, a quantity of detected noise photons may also be increased, because when detecting a received single photon, the detection unit does not distinguish whether the single photon is a signal photon or a noise photon. In this solution, the quantity of detected noise photons may be increased. However, the signal photons have a very strong time correlation (that is, a large quantity of signal photons are reflected in a short time after a laser emits a pulse, and therefore, after receiving a signal photon, the detection unit receives a large quantity of other signal photons in a subsequent deadtime), and the noise photons do not have a time correlation and are random. Therefore, a quantity of signal photons actually detected by the detection apparatus is far greater than the quantity of detected noise photons, that is, a signal-to-noise ratio can be improved. This helps improve the capability of a lidar in detecting the target obj ect.

In an optional implementation, the first detection unit includes at least one detection subunit. Each detection subunit may independently complete single-photon counting. In a possible design, the detection subunit may be obtained by dividing the first detection unit based on a pixel granularity, that is, one detection subunit corresponds to one pixel.

When the first detection unit includes one detection subunit, it is equivalent to that the detection unit corresponds to one pixel, and the detection subunit and the signal converter may be in a one-to-one relationship. In this way, structural complexity of a detector may be reduced.

When the first detection unit includes a plurality of detection subunits (that is, when the plurality of detection subunits are combined (binning) as one detection unit), it is equivalent to that one detection unit corresponds to a plurality of pixels. The detection subunit and the signal converter may be in a many-to-one relationship, or certainly may be in a many-to-many relationship. This is not limited in this application. Further, any two different detection subunits in the first detection unit may be connected to different signal converters. Alternatively, any two different detection subunits may be connected to a same signal converter. This is not limited in this application.

It may be understood that, because each detection subunit may independently complete measurement on single-photon counting, when the first detection unit includes the plurality of detection subunits, it is equivalent to combining single photon events independently measured by the plurality of detection subunits. Therefore, the first detection unit may respond to more incident photons at a same moment, and output a count of single photons. Therefore, when there is a larger quantity of detection subunits included in the first detection unit, a dynamic range of the first detection unit is larger.

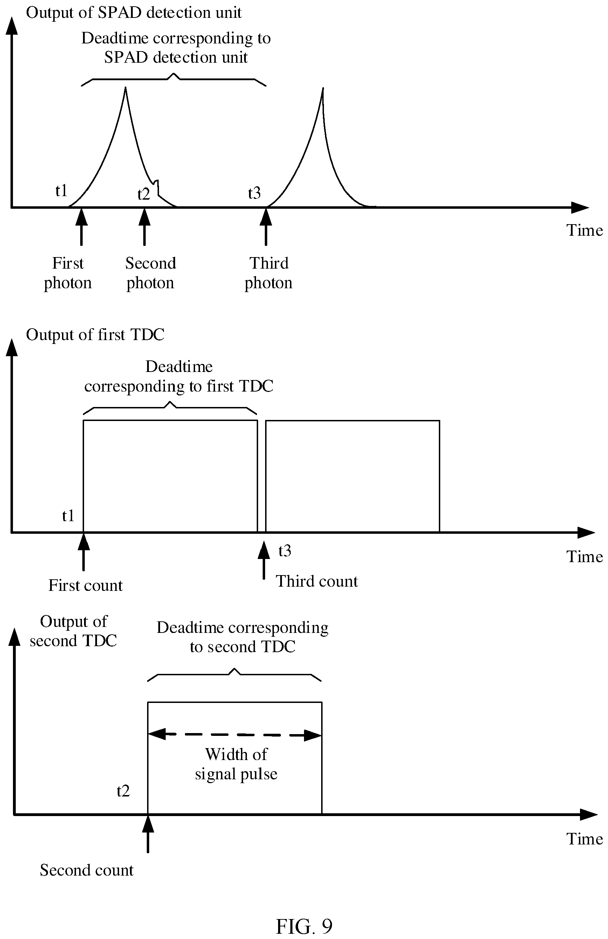

In an optional implementation, a deadtime corresponding to the first signal converter is less than or equal to a deadtime corresponding to the first detection unit. For example, as shown in FIG. 9, if a deadtime corresponding to a first TDC is less than or equal to a deadtime corresponding to the SPAD detection unit, when a third photon arrives at the SPAD detection unit, the deadtime of the first TDC has ended. Therefore, the first TDC may perform counting on the third photon. It can be learned from a comparison between the third photon in FIG. 9 and the third photon in FIG. 3 that the first TDC may perform counting on more photons in a same time range. Therefore, in this implementation, an overall capability of the detection apparatus in performing counting on the photons may be improved. This helps further improve the capability of a lidar in detecting the target object.

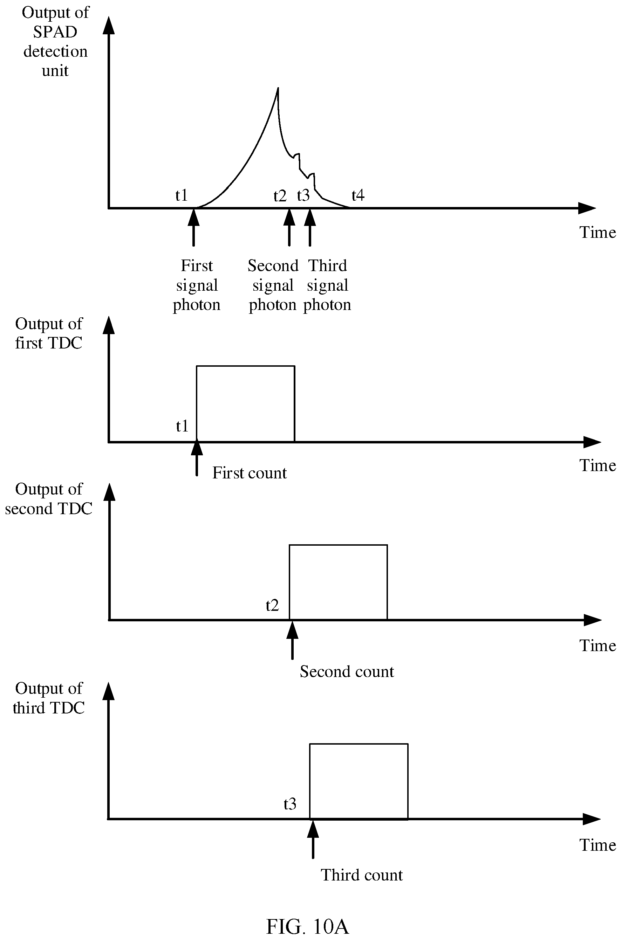

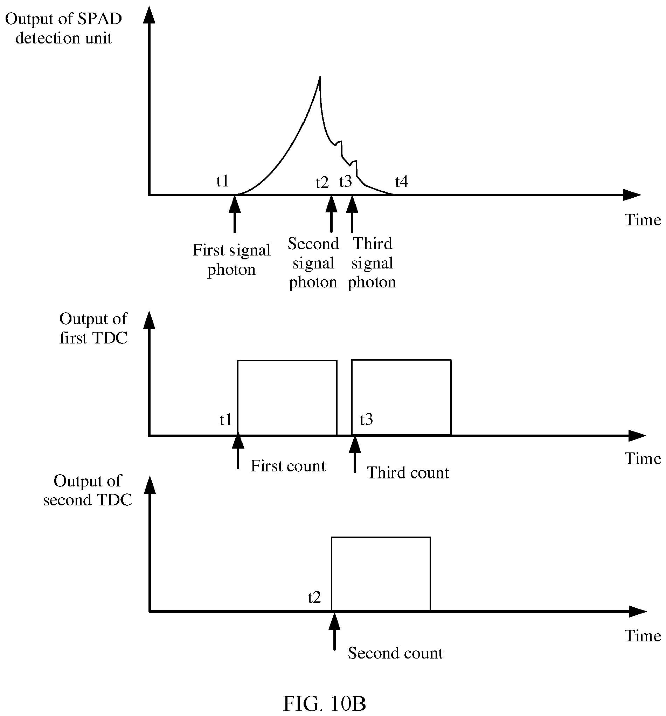

In an optional implementation, the laser further emits a third emission signal at a first moment. The first detection unit further receives a third reflected signal corresponding to the third emission signal. The detection apparatus may process the third reflected signal by using a third signal converter. Alternatively, if the first signal converter has completely processed a first reflected signal, the detection apparatus may process the third reflected signal by using the first signal converter. For example, the detection unit is the SPAD detection unit, and the signal converter is the TDC. After a second signal photon is received within a SPAD deadtime corresponding to the SPAD detection unit, if the third signal photon is further received within the SPAD deadtime, after a second signal photon is received within a SPAD deadtime corresponding to the SPAD detection unit, if the third signal photon is further received within the SPAD deadtime, a third TDC connected to the SPAD detection unit may be triggered, based on the third signal photon, to perform counting on the third signal photon, as shown in FIG. 10A. Alternatively, when a time at which the third signal photon is received is after a TDC deadtime range corresponding to the first TDC, the first TDC may be triggered, based on the third signal photon, to perform counting on the third signal photon, as shown in FIG. 10B.

In an optional implementation, deadtimes corresponding to all signal converters connected to a same detection unit are the same. Alternatively, types of all signal converters connected to a same detection unit are the same. Therefore, the deadtime corresponding to the first signal converter is the same as the deadtime corresponding to the second signal converter, for example, as shown in FIG. 9, or a type of the first signal converter is the same as a type of the second signal converter. For example, the first signal converter and the second signal converter are TDCs of a same model, and TDC deadtimes of the TDCs of a same model are the same. In this way, complexity of the detection apparatus can be reduced.

In an optional implementation, the at least one processing unit may specifically determine location information of the at least one target based on a histogram corresponding to a processing result of the first signal converter and a processing result of the second signal converter. The histogram includes information about time at which the first detection unit receives the first reflected signal and information about time at which the first detection unit receives the second reflected signal.

For example, the detection unit is still the SPAD detection unit and the signal converter is still the TDC. The signal converter performs counting on single photons received by the SPAD detection unit, to generate a timestamp of the single photon, and the timestamp may represent a time at which the SPAD detection unit receives the single photon. The at least one processing unit may collect statistics on several timestamps generated within a system measurement time range after a laser pulse is emitted, to obtain a histogram for single-photon counting. Then, the at least one processing unit may perform data processing on the histogram by using a specific algorithm (such as FIR filtering, peak detection, a sliding window, and a coherent detection) based on a feature that the signal photons have time correlation but the noise photons do not have time correlation, to obtain the timestamp of the signal photon. Then, the at least one processing unit may calculate a distance between the detection apparatus and the target object based on a time at which the laser emits the pulse and the timestamp of the signal photon. For example, the distance between the detection apparatus and the target object may be calculated based on the histogram by using a time of flight (time of flight, TOF) method. Certainly, in actual application, a main control chip of the lidar may alternatively perform data processing on the histogram and calculate the distance between the detection apparatus and the target object.

In this implementation, statistics on the timestamp of the signal photon may be efficiently collected based on the histogram, to improve efficiency in calculating the related information of the target by the detection apparatus.

In an optional implementation, the detection apparatus may be the lidar. A laser uses a vertical cavity surface emitting laser (vertical cavity surface emitting laser, VCSEL) light source and electronic scanning, to ensure that sufficient signal-photon counts exist in a measurement period for any SPAD detection unit.

In an optional implementation, a pixel of the laser and a pixel of the detector are in a one-to-one correspondence. That is, a pulse emitted by one pixel of the laser is received by one corresponding pixel of the detector. For example, a pulse emitted by a pixel 1 of the laser is received by a pixel 1 of the detector, and a pulse emitted by a pixel 2 of the laser is received by a pixel 2 of the detector.

In another optional implementation, the pixel of the laser and the pixel of the detector are in a one-to-many relationship. That is, a pulse emitted by one pixel of the laser is received by a plurality of corresponding pixels of the detector. For example, the pulse emitted by the pixel 1 of the laser is received by the pixel 1 to a pixel 10 of the detector, and the pulse emitted by the pixel 2 of the laser is received by a pixel 11 to a pixel 20 of the detector.

In another optional implementation, different pixels on the laser may emit pulses to the outside based on a specific rule. For example, each frame corresponds to one graph, and the graph corresponds to a plurality of pixels on the laser. Then, a pixel that needs to be driven to illuminate each time in the pixels corresponding to the graph is determined by using a random number generator.

It should be understood that the foregoing implementations may be implemented in combination with each other.

Based on a same technical concept, an embodiment of this application further provides a processing apparatus. The processing apparatus is configured to control components (such as a laser, a detection unit, and a signal converter) in a detection apparatus to perform the corresponding functions in the foregoing embodiments.

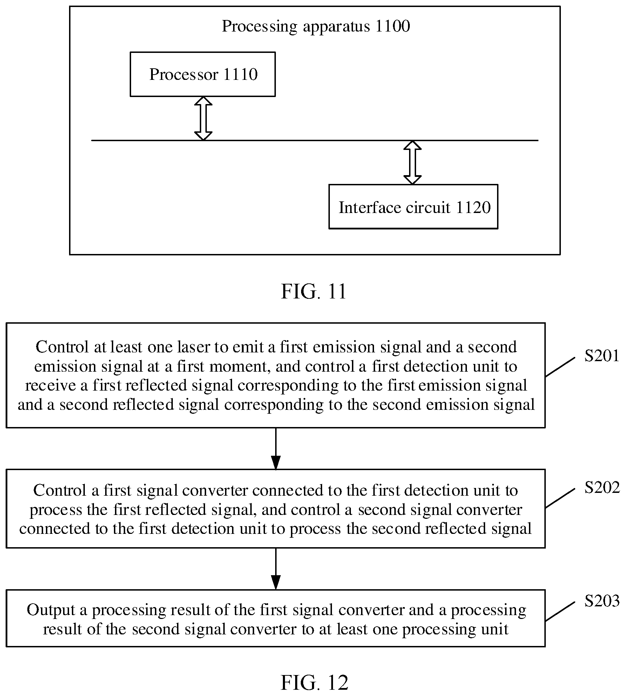

For example, refer to FIG. 11. A processing apparatus 1110 includes at least one processor 1110 and an interface circuit 1120. The interface circuit 1120 is configured to receive a signal from another apparatus (such as a laser, a detection unit, or a signal converter) other than the processing apparatus 1100 and send the signal to the processor 1110, or send the signal from the processor 1110 to the another apparatus (such as a laser, a detection unit, or a signal converter) other than the processing apparatus 1100. The processor 1110 is configured to perform a detection method shown in FIG. 12.

S201: Control at least one laser to emit a first emission signal and a second emission signal at a first moment, and control a first detection unit to receive a first reflected signal corresponding to the first emission signal and a second reflected signal corresponding to the second emission signal.

S202: Control a first signal converter connected to the first detection unit to process the first reflected signal, and control a second signal converter connected to the first detection unit to process the second reflected signal.

S203: Output a processing result of the first signal converter and a processing result of the second signal converter to at least one processing unit.

For a specific implementation of the foregoing steps, refer to the foregoing description. Details are not described herein again.

The processor 1110 may be a central processing unit (Central Processing Unit, CPU), or may be another general-purpose processor, a digital signal processor (Digital Signal Processor, DSP), an application specific-integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

Based on a same technical concept, an embodiment of this application further provides a processing apparatus. The processing apparatus includes modules configured to perform steps of the method shown in FIG. 12.

Based on a same technical concept, an embodiment of this application further provides a computer-readable storage medium. The computer-readable storage medium includes a program or instructions. When the program or the instructions are run on a computer, the method shown in FIG. 12 is performed.

Based on a same technical concept, an embodiment of this application further provides a computer program product including instructions. The computer program product stores the instructions. When the instructions are run on a computer, the computer is enabled to perform steps of the method shown in FIG. 12.

Based on a same technical concept, an embodiment of this application further provides a terminal. The terminal includes one or more apparatuses described above. The terminal may be specifically a vehicle, a flight, a surveying and mapping apparatus, a ship, or the like. A specific form of the terminal is not limited in this application.

For example, an embodiment of this application further provides a vehicle. The vehicle may include a processor, and the processor is configured to perform steps of the method shown in FIG. 5.

In a possible design, the vehicle further includes a memory, and the memory is configured to store a computer program or instructions.

In a possible design, the vehicle further includes a transceiver. The transceiver is configured to receive or send information.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that each procedure and/or block in the flowcharts and/or block diagrams, and combinations of the procedures and/or blocks in the flowcharts and/or block diagrams may be implemented by computer program instructions. These computer program instructions may be provided to a processor of a general-purpose computer, a special-purpose computer, an embedded processor, or another programmable data processing device to generate a machine, such that the instructions executed by the processor of the computer or another programmable data processing device generate an apparatus for implementing a specific function in one or more procedures in the flowcharts and/or one or more blocks in the block diagrams.

These computer program instructions may be stored in a computer-readable memory that can guide the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computerimplemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A detection method, wherein the method comprises:
controlling at least one laser to emit a first emission signal and a second emission signal at a first moment;
controlling a first detection unit to receive a first reflected signal corresponding to the first emission signal and a second reflected signal corresponding to the second emission signal;
controlling a first signal converter connected to the first detection unit to process the first reflected signal;
controlling a second signal converter connected to the first detection unit to process the second reflected signal; and
outputting a processing result of the first signal converter and a processing result of the second signal converter to at least one processing unit.

2. The method according to claim 1, wherein the first detection unit comprises at least one detection subunit.

3. The method according to claim 1 or 2, wherein a start time of the first signal converter and a start time of the second signal converter are different; or strength of a trigger signal corresponding to the first signal converter and strength of a trigger signal corresponding to the second signal converter are different.

4. The method according to any one of claims 1 to 3, wherein the method further comprises:
controlling the at least one processing unit to determine information about at least one target based on the processing result of the first signal converter and the processing result of the second signal converter.

5. The method according to claim 4, wherein the controlling the at least one processing unit to determine information about at least one target based on the processing result of the first signal converter and the processing result of the second signal converter comprises:
controlling the at least one processing unit to determine location information of the at least one target based on a histogram corresponding to the processing result of the first signal converter and the processing result of the second signal converter, wherein
the histogram comprises information about time at which the first detection unit receives the first reflected signal and information about time at which the first detection unit receives the second reflected signal.

6. The method according to any one of claims 1 to 5, wherein a deadtime corresponding to the first signal converter is less than or equal to a deadtime corresponding to the first detection unit.

7. The method according to any one of claims 1 to 6, wherein the deadtime corresponding to the first signal converter is the same as a deadtime corresponding to the second signal converter, or a type of the first signal converter is the same as a type of the second signal converter.

8. The method according to any one of claims 1 to 7, wherein the first detection unit is a single photon avalanche diode SPAD detection unit, and the first signal converter and the second signal converter are time-to-digital converters TDCs.

9. A detection method, wherein the method comprises:
emitting, by at least one laser, a first emission signal and a second emission signal at a first moment;
receiving, by a first detection unit, a first reflected signal corresponding to the first emission signal and a second reflected signal corresponding to the second emission signal;
processing, by a first signal converter connected to the first detection unit, the first reflected signal;
processing, by a second signal converter connected to the first detection unit, the second reflected signal; and
processing, by at least one processing unit, a processing result of the first signal converter and a processing result of the second signal converter.

10. The method according to claim 9, wherein the first detection unit comprises at least one detection subunit.

11. The method according to claim 9 or 10, wherein a start time of the first signal converter and a start time of the second signal converter are different; or strength of a trigger signal corresponding to the first signal converter and strength of a trigger signal corresponding to the second signal converter are different.

12. The method according to any one of claims 9 to 11, wherein the processing, by at least one processing unit, a processing result of the first signal converter and a processing result of the second signal converter comprises:
determining, by the at least one processing unit, information about at least one target based on the processing result of the first signal converter and the processing result of the second signal converter.

13. The method according to claim 12, wherein the determining, by the at least one processing unit, information about at least one target based on the processing result of the first signal converter and the processing result of the second signal converter comprises:
determining, by the at least one processing unit, location information of the at least one target based on a histogram corresponding to the processing result of the first signal converter and the processing result of the second signal converter, wherein
the histogram comprises information about time at which the first detection unit receives the first reflected signal and information about time at which the first detection unit receives the second reflected signal.

14. The method according to any one of claims 9 to 13, wherein a deadtime corresponding to the first signal converter is less than or equal to a deadtime corresponding to the first detection unit.

15. The method according to any one of claims 9 to 14, wherein the deadtime corresponding to the first signal converter is the same as a deadtime corresponding to the second signal converter, or a type of the first signal converter is the same as a type of the second signal converter.

16. The method according to any one of claims 9 to 15, wherein the first detection unit is a SPAD detection unit, and the first signal converter and the second signal converter are TDCs.

17. A processing apparatus, comprising at least one processor and an interface circuit, wherein the interface circuit is configured to receive a signal from another apparatus other than the processing apparatus and send the signal to the processor, or send a signal from the processor to another apparatus other than the processing apparatus, and the processor is configured to:
control at least one laser to emit a first emission signal and a second emission signal at a first moment;
control a first detection unit to receive a first reflected signal corresponding to the first emission signal and a second reflected signal corresponding to the second emission signal;
control a first signal converter connected to the first detection unit to process the first reflected signal;
control a second signal converter connected to the first detection unit to process the second reflected signal; and
output a processing result of the first signal converter and a processing result of the second signal converter to at least one processing unit.

18. The apparatus according to claim 17, wherein the first detection unit comprises at least one detection subunit.

19. The apparatus according to claim 17 or 18, wherein a start time of the first signal converter and a start time of the second signal converter are different; or strength of a trigger signal corresponding to the first signal converter and strength of a trigger signal corresponding to the second signal converter are different.

20. The apparatus according to any one of claims 17 to 19, wherein the processor is further configured to:
control the at least one processing unit to determine information about at least one target based on the processing result of the first signal converter and the processing result of the second signal converter.

21. The apparatus according to claim 20, wherein the processor is further configured to:
control the at least one processing unit to determine location information of the at least one target based on a histogram corresponding to the processing result of the first signal converter and the processing result of the second signal converter, wherein
the histogram comprises information about time at which the first detection unit receives the first reflected signal and information about time at which the first detection unit receives the second reflected signal.

22. The apparatus according to any one of claims 17 to 21, wherein a deadtime corresponding to the first signal converter is less than or equal to a deadtime corresponding to the first detection unit.

23. The apparatus according to any one of claims 17 to 22, wherein the deadtime corresponding to the first signal converter is the same as a deadtime corresponding to the second signal converter, or a type of the first signal converter is the same as a type of the second signal converter.

24. The apparatus according to any one of claims 17 to 23, wherein the first detection unit is a SPAD detection unit, and the first signal converter and the second signal converter are TDCs.

25. A detection apparatus, comprising at least one laser, at least one detection unit, and at least one processing unit, wherein each of the at least one detection unit is connected to a plurality of signal converters;
the at least one laser is configured to emit a first emission signal and a second emission signal at a first moment;
a first detection unit is configured to receive a first reflected signal corresponding to the first emission signal and a second reflected signal corresponding to the second emission signal, wherein the first detection unit is any detection unit in the at least one detection unit, and the first detection unit is connected to a first signal converter and a second signal converter;
the first signal converter is configured to process the first reflected signal;
the second signal converter is configured to process the second reflected signal; and
the at least one processing unit is configured to process a processing result of the first signal converter and a processing result of the second signal converter.

26. The apparatus according to claim 25, wherein the first detection unit comprises at least one detection subunit.

27. The apparatus according to claim 25 or 26, wherein a start time of the first signal converter and a start time of the second signal converter are different; or strength of a trigger signal corresponding to the first signal converter and strength of a trigger signal corresponding to the second signal converter are different.

28. The apparatus according to any one of claims 25 to 27, wherein the at least one processing unit is configured to:
determine information about at least one target based on the processing result of the first signal converter and the processing result of the second signal converter.

29. The apparatus according to claim 28, wherein the at least one processing unit is configured to:
determine location information of the at least one target based on a histogram corresponding to the processing result of the first signal converter and the processing result of the second signal converter, wherein
the histogram comprises information about time at which the first detection unit receives the first reflected signal and information about time at which the first detection unit receives the second reflected signal.

30. The apparatus according to any one of claims 25 to 29, wherein a deadtime corresponding to the first signal converter is less than or equal to a deadtime corresponding to the first detection unit.

31. The apparatus according to any one of claims 25 to 30, wherein the deadtime corresponding to the first signal converter is the same as a deadtime corresponding to the second signal converter, or a type of the first signal converter is the same as a type of the second signal converter.

32. The apparatus according to any one of claims 25 to 31, wherein the first detection unit is a SPAD detection unit, and the first signal converter and the second signal converter are TDCs.

33. A processing apparatus, comprising a module configured to perform the method according to any one of claims 1 to 8.

34. A computer-readable storage medium, comprising a program or instructions, wherein when the program or the instructions are run on a computer, the method according to any one of claims 1 to 8 is performed.

35. A terminal, comprising the apparatus according to any one of claims 25 to 32.

36. A computer program product comprising instructions, wherein the computer program product stores the instructions, and when the instructions are run on a computer, the computer is enabled to perform the method according to any one of claims 1 to 8.
